# EUROPÄISCHE PATENTANMELDUNG

(11) **EP 1 291 058 A1**
(43) Veröffentlichungstag der Anmeldung: **12.03.2003**
(21) Anmeldenummer: 01121816.1
(22) Anmeldetag: 11.09.2001
(51) Int. Cl.: B01D 29/46, B01D 29/11, B01D 25/26

(54) **Verfahren und Vorrichtung zur Steuerung der Filterfeinheit in Feinstfiltern**

(71) Anmelder: Transor Filter GmbH, 61250 Usingen (DE)
(72) Erfinder: Hasse, Gerd J., 61250 Usingen (DE)
(74) Vertreter: Goroll, Peter

(57) **Zusammenfassung**

Das Verfahren zur gezielten Steuerung der Filterfeinheit in Feinstfilteranlagen mit regenerierbarem Filterstab (2) und Vorrichtung zur Durchführung des Verfahrens dient der kontrollierten Abscheidung bestimmter Partikelgrößen oder Partikelgrößenbereiche aus verschmutzten Medien in Filteranlagen (1) bestückt mit Filterstäben (2).

## Beschreibung

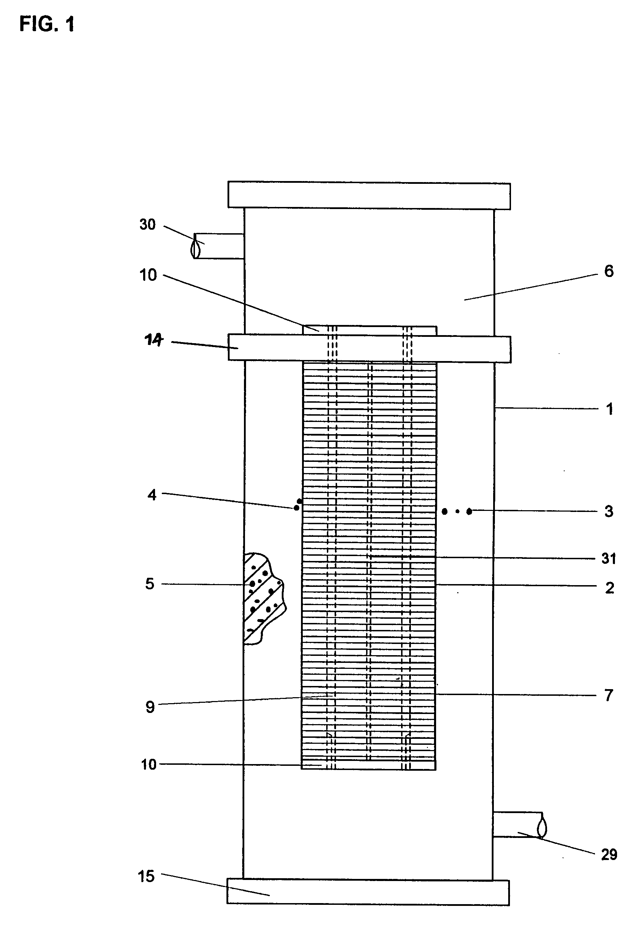

Vorliegendes innovatives Verfahren dient der kontrollierten Abscheidung bestimmter Partikelgrößen (Fig. 1) (4) oder Partikelgrößenbereiche (Fig. 1) (3) aus verschmutzten Medien (Fig. 1) (5) in Filteranlagen (Fig. 1) (1) bestückt mit Filterstäben (Fig. 1) (2), die nachfolgend noch näher beschrieben werden.

Diese Aufgabe wird erfindungsgemäß dadurch gelöst, dass je nach Partikeleigenschaften die Filtriergeschwindigkeit, der Filterdruck und die Schmutzkonzentration im Filterstab (Fig. 1) (2) und im Reinmedium (Fig. 1) (6) beeinflußt werden.

Um dieses innovative Ziel zu erreichen, werden die Filteranlagen/ Feinstfilteranlagen (Fig. 1) (1) mit Filterstäben (Fig. 1) (2) nach Transorverfahren oder gleichartiger Beschaffenheit wie nachfolgend verwendet.

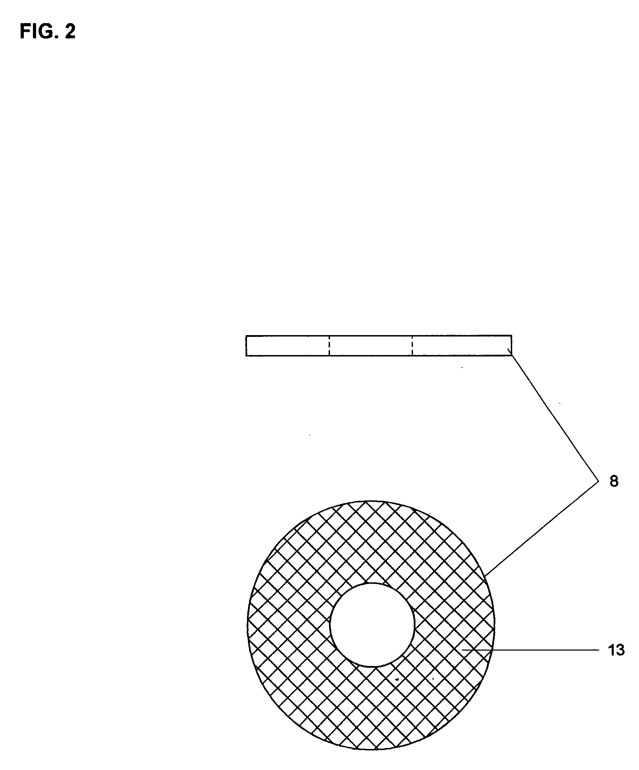

Die oder der Filterstab (Fig. 1) (2) bestehen aus einem Stapel Scheiben (Fig. 1) (7) aus unterschiedlichen geometrischen Formen (Fig. 2) (8) wie z. B. rund, oval, vier-, fünf-, sechs-, bis mehreckig sowie anderen mannigfaltigen geometrischen Formen.

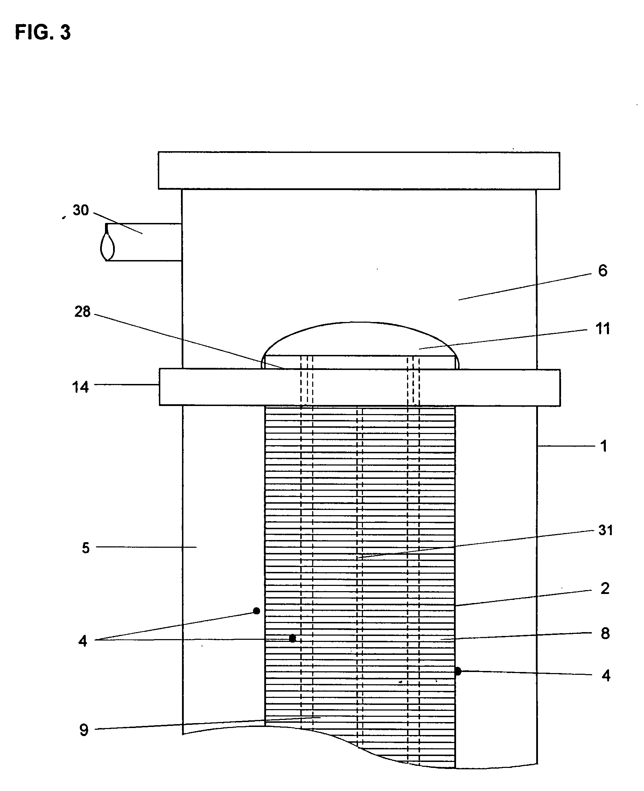

Die einzelnen Scheiben (Fig. 2) (8) werden mechanisch durch den Filterstützkörper (Fig. 3) (9) mittels einer entsprechenden Mutter (Fig. 1) (10) oder einer entsprechend automatisch arbeitenden Vorrichtung (Fig. 3) (11) zusammengedrückt, wobei es wichtig ist, dass die einzelnen Filterscheiben (Fig. 2) (8) keine Verbindung zueinander haben.

Die Filtration von in Flüssigkeiten (Fig. 1) (5) enthaltenen Feststoffpartikeln (Fig. 1) (4) findet an der Oberfläche der Filterscheiben (Fig. 2) (8) statt, indem diese Feststoffpartikel (Fig. 1) (4) an der Oberfläche der Filterscheiben (Fig. 2) (8) von außen nach innen zum konzentrischen Stützrohr (Fig. 3) (9) durchflossenem Filterstab (Fig. 1) (2) erfolgt und somit an der Oberfläche des Filterstabes (Fig. 1) (2) sich die aufgefangenen Partikel (Fig. 1) (4) ablagern.

Die Abreinigung bzw. Regeneration dieser Filterstäbe (Fig. 1) (2) ist hinreichend bekannt und Stand der Technik.

Ebenfalls bekannt ist auch, dass obige Filterstäbe (Fig. 1) (2) eine vordefinierte Filterfeinheit in Abhängigkeit zu der Scheibenmaterialauswahl (Fig. 2) (8) besitzen.

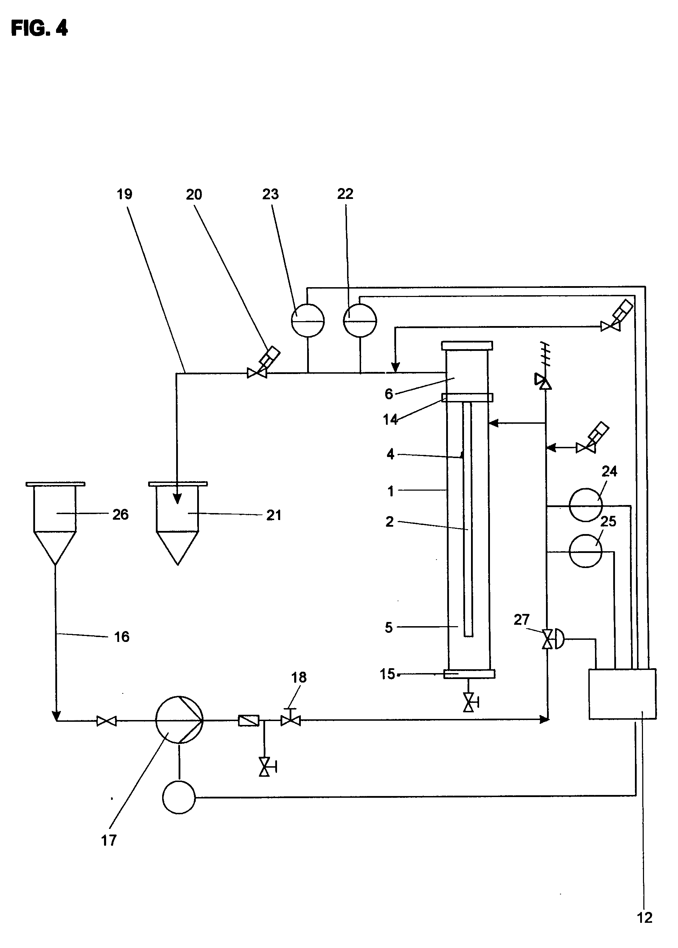

Es soll ein Filterstab (Fig. 1) (2) der Eingangs genannten Gattung hergestellt werden, der in der Lage ist, mit gleichbleibendem Scheibenmaterial (Fig. 2) (8) bestückt und in Kombination mit der Fahrweise und Steuerung (Fig. 4) (12) des gesamten Filtersystems (Fig. 1) (1) eine gezielt variable Filtereinheit zu erreichen.

Diese Aufgabe wird erfindungsgemäß dadurch gelöst, dass die einzelnen Scheiben (Fig. 2) (8) des Stapels (Fig. 1) (2) aus einem medienbeständigen Material (Fig. 2) (8) dessen Oberfläche texturiert ist (Fig. 2) (13) besteht, an die sich die Feststoffpartikel (Fig. 1) (4) anlagern und somit aus den verschmutzten Medien (Fig. 1) (5) entfernt werden.

Der Unterschied zum bekannten Filterstab (Fig. 1) (2) besteht somit darin, dass Feststoffpartikel (Fig. 1) (4) in den Stapel (Fig. 1) (7) eindringen können, aber hierbei lediglich eine bestimmte Partikelgröße (Fig. 1) (4) oder ein Partikelgrößenbereich (Fig. 1) (3) kontrolliert abscheiden kann.

Fig. 4 zeigt ein Schaltbild einer Filtervorrichtung (Fig. 1) (1).

In dem Filtergehäuse (Fig. 1) (1), das durch eine Trennwand (Fig. 3) (14) in den Reinraum (Fig. 1) (6) und einen Schmutzraum (Fig. 1) (5) unterteilt ist, sind vorzugsweise mehrere Filterstäbe (Fig. 1) (2) angeordnet.

Der Filter (Fig. 1) (1) ist am unteren Ende (Fig. 1) (15) verschlossen. Der Filterstab (Fig. 1 (2) ist am oberen Ende durch eine Bohrung (Fig. 3) (28) in der Trennwand (Fig. 3) (14) mit dem Reinraum (Fig. 1) (6) verbunden. Der Behälter (Fig. 4) (26), der das zu reinigende Medium (Fig. 1) (5) aufnimmt, ist über eine Leitung (Fig. 4) (16) einer Filterpumpe (Fig. 4) (17) und einer Armatur (Fig. 4) (18) mit dem Schmutzraum (Fig. 1) (5) verbunden.

Aus dem Reinraum (Fig. 1) (6) führt eine Leitung (Fig. 4) (19) über eine Armatur (Fig. 4) (20) in den Reintank (Fig. 4) (21), der die gefilterte Flüssigkeit aufnimmt.

Messeinrichtungen (Fig. 4) (22), (Fig. 4) (23), (Fig. 4) (24), (Fig. 4) (25) sind nach den Erfordernissen in den Leitungen (Fig. 4) (16) und (Fig. 4) (19) und nach den Erfordernissen auch in anderen Anlageteilen angebracht.

Alle beschriebenen und nach den Erfordernissen zusätzlichen Armaturen und Messeinrichtungen können durch eine gemeinsame Steuerung (Fig. 4) (12) über den Betriebsablauf gesteuert werden.

Ebenso kann die Filterpumpe (Fig. 4) (17) gesteuert werden.

Für den Filtervorgang wird das zu filtrierende Medium (Fig. 1) (5) aus dem Schmutztank (Fig. 4) (26) über die Filterpumpe (Fig. 4) (17) und die Armatur (Fig. 4) (27) in den Schmutzraum (Fig. 1) (5) gepumpt. Das Medium (Fig. 1) (5) strömt von außen durch den Filterstab (Fig. 1) (2) hinein in den Reinraum (Fig. 1) (6).

Die Schmutzpartikel (Fig. 1) (4) lagern sich ab und das gefilterte Medium (Fig. 1) (5) gelangt in den Reinraum (Fig. 1) (6).

Eine Messeinrichtung (Fig. 4) (22), z. B. ein Trübungsmessgerät, greift ebenso in die Anlagensteuerung (Fig. 4) (12) ein, wie auch andere Messeinrichtungen, z. B. (Fig. 4) (23), (Fig. 4) (24) und (Fig. 4) (25).

Die Steuerung (Fig. 4) (12) regelt nach Auswertung der Eingangssignale die Filterpumpe(Fig. 4) (17), die Regelarmatur (Fig. 4) (27) und je nach den Bedürfnissen auch andere hier nicht dargestellte Armaturen zur Filtergeschwindigkeitsregelung, Regelung des Filterdrucks und der Schmutzkonzentration oder Partikelgröße (Fig. 1) (4) im Reinraum (Fig. 1) (6) bzw. Leitung (Fig. 4) (19), in dem der Filterstab/-stäbe (Fig. 1) (2) beeinflusst werden.

Die Trennwand (Fig. 3) (14), die den Filterstab (Fig. 1) (2) an seinem oberen Ende fixiert, ist mit der Bohrung (Fig. 3) (28) versehen, um das saubere Öl in dem Reinraum (Fig. 1) (6) gelangen zu lassen, wobei der Filterstab (Fig. 1) (2) mit zwei oder mehr vertikalen Schlitzen (Fig. 1) (31) versehen ist.

Die Filteranlage (Fig. 1) (1) ist an ihrem oberen und unteren Ende mit einem Öleinlass (Fig. 1) (29) und -auslass (Fig. 1) (30) versehen.

## Patentansprüche

1. Verfahren zur gezielten Steuerung der Filterfeinheit in Feinstfilteranlagen mit regenerierbarem Filterstab und Vorrichtung zur Durchführung des Verfahrens **dadurch gekennzeichnet, dass** der Filter (Fig.1, 3, 4) (1) einen speziellen Filterstab (Fig.1, 3, 4) (2) beinhaltet.

2. Verfahren zur gezielten Steuerung der Filterfeinheit in Feinstfilteranlagen mit regenerierbarem Filterstab und Vorrichtung zur Durchführung des Verfahrens nach Anspruch 1 **dadurch gekennzeichnet, dass** der Filter (Fig.1, 3, 4) (1) aus dem Reinraum (Fig.1, 3, 4) (6) und dem Schmutzraum (Fig.1, 3, 4) (5) besteht.

3. Verfahren zur gezielten Steuerung der Filterfeinheit in Feinstfilteranlagen mit regenerierbarem Filterstab und Vorrichtung zur Durchführung des Verfahrens nach den Ansprüchen 1 und 2 **dadurch gekennzeichnet, dass** der Reinraum (Fig.1, 3, 4) (6) von dem Schmutzraum (Fig.1, 3, 4) (5) mit der Trennwand (Fig. 3, 4) (14) getrennt ist.

4. Verfahren zur gezielten Steuerung der Filterfeinheit in Feinstfilteranlagen mit regenerierbarem Filterstab und Vorrichtung zur Durchführung des Verfahrens nach den vorhergehenden Ansprüchen **dadurch gekennzeichnet, dass** der Reinraum (Fig.1, 3, 4) (6) mit dem Ölauslauf (Fig.1, 3) (30) zur Abführung des sauberen Materials versehen ist.

5. Verfahren zur gezielten Steuerung der Filterfeinheit in Feinstfilteranlagen mit regenerierbarem Filterstab und Vorrichtung zur Durchführung des Verfahrens nach den vorhergehenden Ansprüchen **dadurch gekennzeichnet, dass** der Schmutzraum (Fig.1, 3, 4) (5) mit dem Öleinlauf (Fig. 1) (29) zum Einfluss des schmutzigen Materials in die Filteranlage ausgestattet ist.

6. Verfahren zur gezielten Steuerung der Filterfeinheit in Feinstfilteranlagen mit regenerierbarem Filterstab und Vorrichtung zur Durchführung des Verfahrens nach den vorhergehenden Ansprüchen **dadurch gekennzeichnet, dass** der Filter (Fig.1, 3, 4) (1) unten mit dem Verschluss (Fig.1, 4) (15) ausgestattet ist.

7. Verfahren zur gezielten Steuerung der Filterfeinheit in Feinstfilteranlagen mit regenerierbarem Filterstab und Vorrichtung zur Durchführung des Verfahrens nach den vorhergehenden Ansprüchen **dadurch gekennzeichnet, dass** der Filterstab (Fig.1, 3, 4) (2) aus einzelnen in verschiedenen geometrischen Formen Filterscheiben(Fig. 2, 3) (8) besteht.

8. Verfahren zur gezielten Steuerung der Filterfeinheit in Feinstfilteranlagen mit regenerierbarem Filterstab und Vorrichtung zur Durchführung des Verfahrens nach den vorhergehenden Ansprüchen **dadurch gekennzeichnet, dass** die Filterscheiben (Fig.2, 3) (8) auf einem hohlen Stützrohr (Fig. 1, 3) (9) aufeinander gelegt sind.

9. Verfahren zur gezielten Steuerung der Filterfeinheit in Feinstfilteranlagen mit regenerierbarem Filterstab und Vorrichtung zur Durchführung des Verfahrens nach den vorhergehenden Ansprüchen **dadurch gekennzeichnet, dass** die Filterscheiben (Fig. 2, 3) (8) mit zwei Muttern (Fig. 1) (10) befestigt und zusammengedrückt werden.

10. Verfahren zur gezielten Steuerung der Filterfeinheit in Feinstfilteranlagen mit regenerierbarem Filterstab und Vorrichtung zur Durchführung des Verfahrens nach den vorhergehenden Ansprüchen **dadurch gekennzeichnet, dass** die Filterscheiben (Fig.2, 3) (8) in anderer Version mit einer automatischen Vorrichtung (Fig. 3) (11) gehalten und zusammengedrückt werden.

11. Verfahren zur gezielten Steuerung der Filterfeinheit in Feinstfilteranlagen mit regenerierbarem Filterstab und Vorrichtung zur Durchführung des Verfahrens nach den vorhergehenden Ansprüchen **dadurch gekennzeichnet, dass** die Filterscheiben (Fig.2, 3) (8) auf der Oberfläche mit einer speziellen Textur (Fig. 3) (8) belegt sind.

12. Verfahren zur gezielten Steuerung der Filterfeinheit in Feinstfilteranlagen mit regenerierbarem Filterstab und Vorrichtung zur Durchführung des Verfahrens nach vorhergehenden Ansprüchen **dadurch gekennzeichnet, dass** der Filter (Fig.1, 3, 4) (1) über den Öleinlauf (Fig. 1) (29) an die Leitung (Fig. 4) (19) angeschlossen ist.

13. Verfahren zur gezielten Steuerung der Filterfeinheit in Feinstfilteranlagen mit regenerierbarem Filterstab und Vorrichtung zur Durchführung des Verfahrens nach vorhergehenden Ansprüchen **dadurch gekennzeichnet, dass** der Filter(Fig.1, 3, 4) (1) über die Leitung (Fig. 4) (16), die Filterpumpe (Fig.4) (17) und die Armatur (Fig. 4) (18) mit dem Schmutztank (Fig. 4) (26) verbunden ist.

14. Verfahren zur gezielten Steuerung der Filterfeinheit in Feinstfilteranlagen mit regenerierbarem Filterstab und Vorrichtung zur Durchführung des Verfahrens nach vorhergehenden Ansprüchen **dadurch gekennzeichnet, dass** der Filter (Fig. 1, 3, 4) (1) über die Leitung (Fig. 4) (19) und die Armatur (Fig. 4) (20) mit dem Reintank (Fig. 4) (21) verbunden ist.

15. Verfahren zur gezielten Steuerung der Filterfeinheit in Feinstfilteranlagen mit regenerierbarem Filterstab und Vorrichtung zur Durchführung des Verfahrens nach vorhergehenden Ansprüchen **dadurch gekennzeichnet, dass** an den Leitungen (Fig. 4) (16) und (19) Messeinrichtungen (Fig. 4) (22), (23), (24), (25), (26) angebracht sind.

16. Verfahren zur gezielten Steuerung der Filterfeinheit in Feinstfilteranlagen mit regenerierbarem Filterstab und Vorrichtung zur Durchführung des Verfahrens nach vorhergehenden Ansprüchen **dadurch gekennzeichnet, dass** der Filter (Fig. 1, 3, 4) (1) über die Anlagensteuerung (Fig. 4) (12) gesteuert ist.
